# EUROPEAN PATENT SPECIFICATION

(11) **EP 1 236 508 B1**
(45) Date of publication and mention of the grant of the patent: **16.11.2005**
(21) Application number: 01104613.3
(22) Date of filing: 23.02.2001
(51) Int. Cl.: B01J 23/38, B01J 23/54, B01J 23/89, C09C 1/48, C09C 1/56, H01M 4/86, H01M 4/88

(54) **Method for preparing an electrocatalytic compound**
Verfahren zur Herstellung einer elektrokatalytischen Verbindung
Procédé de préparation d'un composé électrocatalytique

(43) Date of publication of application: 04.09.2002
(73) Proprietor: Umicore AG & Co. KG, 63457 Hanau-Wolfgang (DE)
(72) Inventor: Arndt, Jörg Dr., 53881 Euskirchen (DE); Auer, Emmanuel Dr., 60528 Frankfurt (DE); Bergemann, Klaus Dr., 50170 Kerpen-Sindorf (DE); Ruth, Karsten Dr., 63755 Alzenau (DE); Vogel, Karl Dr., 63755 Alzenau-Michelbach (DE)
(74) Representative: Stellbrink, Axel

(56) References cited:
- WO-A-98/47971
- US-A- 4 186 110
- US-A- 5 767 036
- US-A- 6 007 934
- US-A- 6 017 980
- PATENT ABSTRACTS OF JAPAN vol. 010, no. 112 (C-342), 25 April 1986 (1986-04-25) & JP 60 240768 A (TOUKAI CARBON KK), 29 November 1985 (1985-11-29)

## Description

The present invention relates to a novel method for preparing electrocatalytic compounds. More particularly, the present invention relates to a method for preparing an electrocatalytic compound comprising a carbon black aggregate comprising a carbon phase and a platinum group metal (PGM)-containing species phase, such as platinum-treated carbon blacks. These materials are used as electrocatalytic compounds and electrocatalysts for fuel cells, particularly low temperature fuel cells, i.e. PAFC, PEM and DMFC fuel cells.

Carbon blacks are widely used as pigments, fillers, reinforcing agents and as support materials for precious metal catalysts. A special application of carbon blacks, which is described here, is the use as conductive supports for electrocatalysts in fuel cells, particularly low temperature fuel cells.

Fuel cells are, in principle, gas-operated batteries in which the energy derived from the reaction of hydrogen and oxygen is directly converted into electrical energy. The present invention describes the preparation of electrocatalysts for fuel cells, in particular the preparation of supported catalysts on the basis of platinum and platinum alloys for PEM fuel cells (PEM = polymer electrolyte membrane). This type of fuel cell is gaining growing importance as a source of electrical current for motor vehicles driven by electric motors because of its high energy density and robustness.

Compared to conventional internal combustion engines (ICEs), fuel cells display very low emissions with, at the same time, very high efficiency. When hydrogen is used as fuel gas, water is the only emission formed on the cathode side of the cell. Motor vehicles with this type of drive are termed ZEV (Zero Emission Vehicles).

Carbon blacks are generally produced in a furnace-type reactor by pyrolyzing a hydrocarbon feedstock with hot combustion gases to produce combustion products containing particulate carbon black. Carbon black exists in the form of aggregates. The aggregates, in turn are formed of so-called primary carbon black particles. Carbon blacks are generally characterised on the basis of analytical properties, including, but not limited to particle size and specific surface area; aggregate size, shape, and distribution; and chemical and physical properties of the surface. The properties of carbon blacks are analytically determined by tests known in the art. For example, nitrogen adsorption surface area (measured by ASTM test procedure D3037-Method A) and cetyl-trimethyl ammonium bromide adsorption value (CTAB) (measured by ASTM test procedure D3765 (09.01), are measures of specific surface area. Dibutylphthalate absorption of the crushed (CDBP) (measured by ASTM test procedure D3493-86) and uncrushed (DBP) carbon black (measured by ASTM test procedure D2414-93), relates to the aggregate structure. The properties of a given carbon black depend upon the conditions of manufacture and may be modified, e.g., by altering temperature, pressure, feedstock, residence time, quench temperature, throughput, and other parameters of the furnace reactor.

In US-A-4,186,110 a specific process is disclosed, in which finely divided unalloyed noble metal particles and finely divided particles of an oxide of a refractory metal are reacted to reduce the oxide and at the same time form a finely divided alloy of the noble metal and refractory metal. WHO 98/47971 relates to a specific method of making an aggregate comprising a carbon phase and a silicon-containing species phase.

It is an object of the present invention to provide a novel method for preparing electrocatalytic compounds and electrocatalysts for fuel cell applications. These materials have superior properties regarding to electrochemical performance, electrical power and lifetime in fuel cells. Thus, they lead to a reduced precious metal consumption in PEM fuel cells, which is of prime importance for commercial applications. Furthermore, the manufacturing process of the electrocatalysts described here is cheaper and more environmentally friendly compared to the standard precipitation processes used for electrocatalysts.

Particularly, it is an object to provide a single stage, dry process for preparing an electrocatalyst incorporating platinum group metal-treated carbon blacks, such as platinum-supported or ruthenium-supported carbon blacks.

Additional features and advantages of the present invention will be set forth in part in the description which follows, and in part will be apparent from the description, or may be learned by the practice of the present invention. The objectives and other advantages of the present invention may be realised and obtained by means of the elements and combinations particularly pointed out in the written description and the claims.

The present invention relates to a method for preparing an electrocatalytic compound. The electrocatalytic compound comprises containing at least a carbon phase and a platinum group metal-containing species phase. The platinum group metal-containing species include compounds containing platinum, ruthenium, rhodium, palladium, osmium, iridium and or its alloys, for example platinum/ruthenium or platinum/palladium. The platinum group metal-containing species can also include various oxides of the platinum group metals, for example ruthenium oxide, palladium oxide (PdO) or others. Accordingly, the platinum group metal-treated carbon black obtainable by the present invention can have two or more different types of platinum group metal-containing species phases and/or additional non-precious metal/base-metal species phases. Typical base metals include rhenium, chromium, cobalt, nickel, copper, zinc, manganese, zirconium, titanium and others as described in U.S. 5,830,930, U.S. 5,877,238, U.S. 6,028,137 and WO 96/37547.

The metal-containing species phase can be distributed through at least a portion of the aggregate and is an intrinsic part of the aggregate. Thus, the platinum group metal-treated carbon black aggregates obtainable by the present invention include at least one platinum group metal-containing region concentrated at or near the surface of the aggregate (but part of the aggregate) or within the aggregate. Thus, as stated earlier, the platinum group metal-treated carbon black aggregates can be described as aggregates comprising a carbon phase and a platinum group metal-containing species phase. The aggregates thus contain at least two phases, one of which is carbon and the other of which is a platinum group metal-containing species. The platinum group metal-containing species phase is part of the same aggregate as the carbon phase. Further, it is within the bounds of the present invention to have a platinum group metal-treated carbon black containing more than one type of a platinum group metal-containing species phase or the platinum group metal-treated carbon black can also contain a base metal (i.e, non platinum group metal) containing species. For example, the platinum group metal-treated carbon black obtainable by the present invention can have an aggregate comprising a carbon phase, an platinum-containing species phase, and a palladium-containing species phase.

Furthermore , the platinum group metal treated carbon blacks can be used as intermediates and precursors for manufacture of regular supported precious metal catalysts. In this case, the platinum group metal species, deposited according to the present invention, acts as an anchoring or crystallising point for additional precious metal or base metal deposition on the support. The additional precious metal or base-metal deposition can be done by conventional precipitation methods as described for example in U.S. 6,007,934 or U.S. 5,767,036. In this case, precious metal catalysts with superior properties are obtained.

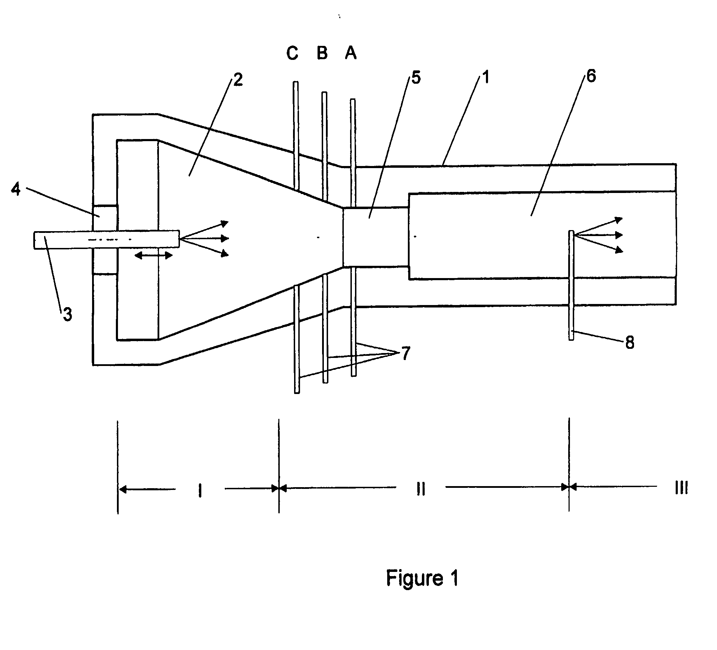

In the furnace carbon black process the oxidative pyrolysis of the carbon black feedstock is carried out in a reactor lined with refractory materials. Fig. 1 is a schematic view of a longitudinal cross section of one type of carbon black reactor (1) which may be used to produce the treated carbon blacks according to the present invention.

In such a reactor three zones may be distinguished, which are arranged in line, one after the other, along the axis of the reactor and have the reaction media flow through them one after the other.

The first zone (I), the so-called combustion zone, essentially comprises the combustion chamber (2) of the reactor. Here a hot process gas is produced by combustion of a fuel, as a rule a hydrocarbon, with a surplus of preheated combustion air or other gases containing oxygen. Today natural gas is used for the most part as fuel, but liquid hydrocarbons such as light and heavy fuel oil can also be used. The combustion of the fuel usu-ally takes place with a surplus of oxygen. The surplus air promotes complete combustion of the fuel and serves to control the carbon black quality. The fuel is usually fed into the combustion chamber by means of one or more burner lances (3). Combustion air is introduced via opening (4) of the end wall of the combustion chamber.

The second zone (II) of the carbon black reactor is the so-called reaction zone or pyrolysis zone. It comprises the carbon black feedstock injector lances (7), restriction ring (5) and part of the subsequent expansion chamber (6). In the reaction zone carbon black formation takes place. For this purpose the carbon black feedstock, in general a so-called carbon black oil, is injected into the stream of the hot process gas and mixed with it. In relation to the quantity of incompletely converted oxygen in the combustion zone, the quantity of hydrocarbons in the reaction zone is in surplus. Hence the formation of carbon black normally sets in here.

Carbon black oil may be injected into the reactor in various ways. For example, an axial oil injection lance or one or more radial oil lances (7) that are arranged on the circumference of the reactor in a plane perpendicular to the direction of flow are suitable. A reactor may have several planes (C, B, A) with radial oil lances along the direction of the flow. At the end of the oil lances there are spray nozzles with which the carbon black oil is mixed into the stream of the process gas.

When carbon black oil and gaseous hydrocarbons, such as methane, for example, are used simultaneously as carbon black feedstock, the gaseous hydrocarbons can be injected into the stream of the hot off-gas separately from the carbon black oil by a special set of gas lances.

In the third zone (III) of the carbon black reactor, the so-called separation zone (quench zone), the formation of carbon black is interrupted through rapid cooling of the process gas containing carbon black. Through this, unwanted after-reactions are avoided. Such after-reactions lead to porous carbon blacks. The cessation of the reaction is generally achieved through spraying in water by means of appropriate spray nozzles (8). Generally the carbon black reactor has several places along the reactor for spraying in water or quenching, so that the time that the carbon black stays in the reaction zone may be varied. The residual heat of the process gas is utilised in an attached heat exchanger to preheat the combustion air and the carbon black oil.

The platinum group metal-treated carbon blacks obtainable by the present invention may be made by introducing a volatilizable metal-containing compound into the carbon black reactor at a point upstream and/or downstream of the quench zone and/or in the quench zone itself Useful volatilizable compounds (i.e., the platinum group metal-containing compounds) include any compound, which is volatilizable at carbon black reactor temperatures. Examples include volatilizable or decomposable salts of platinum group metals, like nitrates, nitrites, carbonates, hydroxycarbonates, acetates, acetyl-acetonates, organo-resinates, neodecanoates, ethylhexanoates, octanoates, and the like. Other examples include carbon monoxide containing compounds (i.e. carbonyl (CO) complexes) or π-complexes containing olefinic and acetylenic hydrocarbon ligands. Furthermore, platinum group metal compounds containing silane, germane or borane ligands as well as amino groups can be used. Besides the volatilizable compounds, decomposable metal-containing compounds which are not necessarily volatilizable can also be used to yield the metal-treated carbon black.

The platinum group metal containing compound may be premixed with the carbon black-forming feedstock and introduced with the feedstock into the reaction zone. Alternatively, the volatilizable compound may be introduced to the reaction zone separately from the feedstock injection point. Such introduction may be upstream or downstream from the feedstock injection point, provided the volatilizable compound is introduced upstream and/or downstream from the quench zone and/or in the quench zone. Upon vaporization and exposure to high temperatures in the reactor, the compound decomposes, and reacts with other species in the reaction zone, yielding platinum group metal-treated carbon black, such that the platinum group metal, or platinum group metal-containing species, becomes an intrinsic part of the carbon black.

As discussed in further detail below, if the volatilizable compound is introduced substantially simultaneously with the feedstock, the platinum group metal-treated regions are distributed throughout at least a portion of the carbon black aggregate.

In a second embodiment of the present invention, the volatilizable compound is introduced to the reaction zone at a point after carbon black formation has commenced but before the reaction stream has been subjected to the quench. In this embodiment, platinum group metal-treated carbon black aggregates are obtained in which the platinum group metal-containing species phase is concentrated primarily at or near the surface of the aggregate.

The flow rate of the volatilizable compound will determine the weight percent of platinum group metal in the treated carbon black. The weight percent of the elemental platinum group metal (e.g. elemental Pt or Pd) in the treated carbon black generally ranges from about 0.1 % to 99 %, preferably 1 % to 60 %, by weight of the aggregate.

The properties of the platinum group metal treated carbon blacks are analytically determined by tests known to the art. For example, the nitrogen adsorption surface area (BET measured by ASTM test procedure D3037-Method A) is in the range of 20 to 1000 m²/g. The cetyl-trimethyl ammonium bromide adsorption value (CTAB, measured by ASTM test procedure D3765 (09.01) is in the range of 10 to 500 m²/g. The dibutyl-phthalate absorption of the crushed carbon black (CDBP, measured by ASTM test procedure D3493-86) is in the range of 20 to 1000 ml/100 g

By way of the following examples the invention will be further illustrated.

The electrocatalytic compounds obtainable by the invention were characterized using X-ray diffraction (XRD) and transmission electron microscopy (TEM). Typically, the platinum group metal phase deposits on the carbon black aggregates have a size range between 1 and 1,000 nm, more specifically between 1 nm and 50 nm. The size of the platinum group metal phase depends on the amount of platinum group metal deposited on the carbon black aggregates.

For electrochemical testing, the electrocatalytic compounds were processed into a membrane electrode assembly (MEA) and tested in a PEMFC single cell with 50 cm² active area in hydrogen/air operation at 1.5 bar gas pressure . The total Pt loading in the MEAs was 0.4 mg Pt/cm².

### Example 1

### Preparation of 5 wt.% Pt on carbon black by feedstock addition

In this embodiment, the platinum group metal containing compound is premixed with the carbon black-forming feedstock. A water based solution of Pt-nitrate (20 wt.% Pt content, manufactured by dmc², Hanau/Germany) was mixed into the carbon black hydrocarbon oil by means of a static mixer. This mixture was injected into the reactor by an oil injection lance. At the end of the oil lance, there were spray nozzles with which the carbon black oil was mixed into the stream of the process gas. The flow rate of the carbon black oil was 29 kg/hour. After 30 min, the process had stabilised and a product with the following characteristics was obtained:

| | |
|---|---|
| Pt content: | 5.7 ± 0.5 wt.% Pt |
| CTAB value: | 79 m²/g |
| Pt particle size (XRD) | 5 nm |
| Electrochemical performance: | cell voltage 400 mV @ 600 mA/cm² |

### Example 2

### Preparation of 5 wt. % Pt on carbon black by reaction zone addition

In this embodiment, the platinum group metal compound was introduced to the quench water. A precious metal-treated carbon black electrocatalyst was obtained in which the precious metal-containing species phase was concentrated primarily on the surface of the aggregate. A water based solution of Pt-nitrate (20 wt.% Pt content, manufactured by dmc², Hanau/Germany) was diluted to a 10 wt.% solution and injected by nozzles into the reactor. After 30 min, the process had stabilised and yielded the following product:

| | |
|---|---|
| Pt content: | 4.5 ± 0.5 wt.% Pt |
| CTAB. value: | 105 m²/g |
| Pt particle size (XRD) | 3.5 nm |
| Electrochemical performance: | cell voltage 500 mV @ 600 mA/cm² |

### Example 3

### Preparation of 5 wt.% Pt and 2.5 wt.% Ru on carbon black by feed stock addition

In this embodiment, two platinum group metal compounds were introduced into the reactor zone by feed stock addition described in example 1. A platinum group metal-treated carbon black electrocatalyst was obtained. A water based solution of platinum nitrate (30 wt.% Pt content, manufactured by dmc², Hanau/Germany) and a solution of ruthenium-acetate (15 wt.% Ru, manufactured by dmc², Hanau) was mixed and injected by an oil injection lance into the reactor. After 30 min, the process had stabilised and yielded the following product:

| | |
|---|---|
| Pt content: | 5.0 ± 0.5 wt.% |
| Ru content: | 2.0 ± 0.5 wt.% |
| CTAB value: | 80 m²/g |
| PtRu particle size (XRD) | 4 nm |

This electrocatalyst showed good CO tolerance when applied in a MEA for reformate/air operation.

### Example 4:

### Preparation of 5 wt.% Pt and 1 wt.% Co on carbon black by feed stock addition

In this embodiment, one precious metal compound and one non platinum group precious metal/base metal compound were introduced into the reactor by feed stock addition as described in examples 1 and 3. A mixed platinum group metal/base metal treated carbon black electrocatalyst was obtained in which the platinum group metal-containing species phase is concentreated on the surface of the aggregate. A water-based solution of platinum nitrate (20 wt.% Pt content, manufactured by dmc², Hanau/Germany) and a solution of cobalt (II) acetate-tetrahydrate (Merck, Darmstadt) in water (content 4 wt.% Co) was mixed and injected by an oil injection lance into the reactor. After 30 min, the process had stabilised and yielded the following product:

| | |
|---|---|
| Pt content: | 5.0 ± 0.5 wt.% |
| CTAB value: | 75 m²/g |
| PtCo particle size (XRD) | 5 nm |

### Example 5:

### Preparation of 50 wt.% Pt on carbon black by additional precipitation of platinum

In this example, a 1 wt.% Pt/C electrocatalyst prepared similar to the procedure described in example 1 was used as a starting material/precursor for additional Pt deposition. The Pt content was increased to 50 wt.% Pt by maintaining the high Pt dispersion.

50 g of 1 wt.% Pt/C (prepared similar to example 1) were carefully suspended in 1,500 ml water with the aid of a Ultra-Turrax instrument. The temperature was adjusted to 80 °C by additional heating and the pH of the solution was kept between 7 and 9. A dilute, acidic solution of 245 g hexachloroplatinic (IV) acid (H₂PtCl₆, concentration 20 wt.% Pt) was added dropwise to this hot suspension. The pH was raised to 9 with 2,5 M sodium hydroxide solution over the course of 60 min. After that, the mixture was reduced with formaldehyde solution (37 wt.%) and stirred for additional 60 min. The suspension was filtered and the filter cake was washed with 1,000 ml of water and dried under vacuum at 80 °C. Finally, the electrocatalyst was heat treated under nitrogen atmosphere.

| | |
|---|---|
| Pt particle size | 6.5 nm (XRD-analysis) |
| Pt content | 49.8 wt.% Pt |
| Electrochemical performance | cell voltage 600 mV @ 600 mA/cm² |

## Claims

1. A method for preparing an electrocatalytic compound comprising a carbon black aggregate comprising a carbon phase and a platinum group metal (PGM)-containing species phase, the method comprising:
introducing at least one decomposable or volatilizable platinum group metal (PGM)-containing compound into a reactor along with a carbon black feed stock or during the formation of carbon black or adding the at least one decomposable or volatilizable platinum group metal (PGM)-containing compound to the quench zone to the reactor at a sufficient temperature to decompose or volatilise said compound and form an aggregate comprising a carbon phase and at least one metal-containing species phase.

2. The method of claim 1, wherein said platinum group metal (PGM)-coptaining species phase comprises (PGM) a platinum-containing species phase, a ruthenium-containing species phase, a rhodium-containing species phase, a palladium-containing species phase, an osmium-containing species phase, an iridium-containing species phase or mixtures thereof.

3. The method of claim 1, wherein said platinum group metal(PGM)-containing species phase exists primarily at the surface of the aggregate.

4. The method of claim 1, wherein said platinum group metal(PGM)-containing species phase is distributed throughout the aggregate.

5. The method of claim 1, wherein said platinum group metal (PGM)-containing species phase is oxidised.

6. The method of claim 1, wherein said platinum group metal (PGM)-containing species phase comprises from about 0.1 % to about 99 % elemental platinum group metal, by weight, of said aggregate.

7. The method of claims 1 to 6, wherein the platinum group metal (PGM)-containing species phase is used as intermediate or precursor for manufacture of a regular supported platinum group metal catalyst by acting as an anchoring point for additional platinum group metal or base metal deposition on the carbon phase.

## Patentansprüche

1. Verfahren zur Herstellung einer elektrokatalytischen Verbindung, die ein Rußaggregat, umfassend eine Kohlenstoff-Phase und eine Platingruppenmetall (PGM)-enthaltende Spezies-Phase, umfasst, wobei das Verfahren umfasst:
Einführen mindestens einer zersetzbaren oder verflüchtigbaren Platingruppenmetall (PGM)-enthaltenden Verbindung in einen Reaktor zusammen mit einem Ruß-Beschickungsmaterial oder während der Bildung des Rußes oder Zugeben der mindestens einen zersetzbaren oder verflüchtigbaren Platingruppenmetall (PGM)-enthaltenden Verbindung zu der Quenchzone des Reaktors bei einer Temperatur, die ausreicht, die Verbindung zu zersetzen oder zu verflüchtigen und ein Aggregat zu bilden, umfassend eine Kohlenstoffphase und mindestens eine Platingruppenmetall (PGM)-enthaltende Spezies-Phase.

2. Verfahren nach Anspruch 1, wobei die Platingruppenmetall (PGM)-enthaltende Spezies-Phase eine Platin-enthaltende Spezies-Phase, eine Ruthenium-enthaltende Spezies-Phase, eine Rhodium-enthaltende Spezies-Phase, eine Palladium-enthaltende Spezies-Phase, eine Osmium-enthaltende Spezies-Phase, eine Iridium-enthaltende Spezies-Phase oder Gemische davon umfasst.

3. Verfahren nach Anspruch 1, wobei die Platingruppenmetall (PGM)-enthaltende Spezies-Phase hauptsächlich an der Oberfläche des Aggregats vorhanden ist.

4. Verfahren nach Anspruch 1, wobei die Platingruppenmetall (PGM)-enthaltende Spezies-Phase durch das Aggregat verteilt ist.

5. Verfahren nach Anspruch 1, wobei die Platingruppenmetall (PGM)-enthaltende Spezies-Phase oxidiert wird.

6. Verfahren nach Anspruch 1, wobei die Platingruppenmetall (PGM)-enthaltende Spezies-Phase etwa 0,1 % bis etwa 99 % elementares Platingruppenmetall, bezogen auf das Gewicht, des Aggregats ausmacht.

7. Verfahren nach den Ansprüchen 1 bis 6, wobei die Platingruppenmetall (PGM)-enthaltende Spezies-Phase als Zwischenstufe oder Vorstufe zur Herstellung eines regulären geträgerten Platingruppenmetallkatalysators verwendet wird, indem sie als eine Verankerungsstelle für zusätzliche Platingruppenmetall- oder Nichtedelmetallabscheidung auf der Kohlenstoffphase wirkt.

## Revendications

1. Procédé de préparation d'un composé électrocatalytique comprenant un agrégat de noir de carbone comprenant une phase carbonée et une phase d'espèces contenant un métal du groupe du platine (PGM),
**caractérisé par**
- l'introduction d'au moins un composé contenant un métal du groupe du platine (PGM) décomposable ou volatilisable dans un réacteur, conjointement avec une charge de départ de noir de carbone ou durant la formation du noir de carbone, ou bien
- l'ajout de l'au moins un composé contenant un métal du groupe du platine (PGM) décomposable ou volatilisable dans la zone de trempe du réacteur
- à une température suffisante pour entraîner la décomposition ou la volatilisation dudit composé et former un agrégat comprenant une phase carbonée et au moins une phase d'espèces contenant un métal du groupe du platine (PGM).

2. Procédé selon la revendication 1,
**caractérisé en ce que**
la phase d'espèces contenant un métal du groupe du platine (PGM) comprend une phase d'espèces contenant du platine, une phase d'espèces contenant du ruthénium, une phase d'espèces contenant du rhodium, une phase d'espèces contenant du palladium, une phase d'espèces contenant de l'osmium, une phase d'espèces contenant de l'iridium ou des mélanges de celles-ci.

3. Procédé selon la revendication 1,
**caractérisé en ce que**
la phase d'espèces contenant un métal du groupe du platine (PGM) est principalement présente à la surface de l'agrégat.

4. Procédé selon la revendication 1,
**caractérisé en ce que**
la phase d'espèces contenant un métal du groupe du platine (PGM) est répartie à travers tout l'agrégat.

5. Procédé selon la revendication 1,
**caractérisé en ce que**
la phase d'espèces contenant un métal du groupe du platine (PGM) est oxydée.

6. Procédé selon la revendication 1,
**caractérisé en ce que**
la phase d'espèces contenant un métal du groupe du platine (PGM) comporte d'environ 0,1 % à environ 99 % en poids de métal élémentaire du groupe du platine rapporté à l'agrégat.

7. Procédé selon les revendications 1 à 6,
**caractérisé en ce que**
la phase d'espèces contenant un métal du groupe du platine (PGM) est utilisé comme intermédiaire ou précurseur pour la fabrication d'un catalyseur de métal du groupe du platine supporté régulier en agissant comme point d'ancrage pour le dépôt supplémentaire de métal du groupe du platine ou de métal de base sur la phase carbonée.
